# FASCICULE DE BREVET EUROPEEN

(11) **EP 0 437 389 B1**
(45) Date de publication et mention de la délivrance du brevet: **12.10.1994**
(21) Numéro de dépôt: 91400021.1
(22) Date de dépôt: 08.01.1991
(51) Int. Cl.: B60S 1/38

(54) **Lame d'essuie-glace et balai d'essuie-glace comportant une telle lame**
Scheibenwischerleiste und Scheibenwischerblatt ausgestattet mit solch einer Leiste
Windshield wiper element and windshield wiper blade provided with such an element

(30) Priorité: 11.01.1990 FR 9000291
(43) Date de publication de la demande: 17.07.1991
(73) Titulaire: VALEO SYSTEMES D'ESSUYAGE, 78180 Montigny-Le-Bretonneux (FR)
(72) Inventeur: Maubray, Daniel, F-92310 Issy-Les-Moulineaux (FR)
(74) Mandataire: Gamonal, Didier

(56) Documents cités:
- FR-A- 2 628 047
- PATENT ABSTRACTS OF JAPAN vol. 10, no. 261 (M-514)(2317) 05 septembre 86,& JP-A-61 85245 (NIPPON DENSO) 30 avril 86,

## Description

La présente invention concerne une lame d'essuieglace. Elle concerne aussi un balai d'essuie-glace équipé d'une telle lame. L'invention trouve application particulièrement dans le domaine de l'essuyage de vitres ou de pare-brises en particulier dans le domaine automobile.

Dans l'art antérieur, on a déjà réalisé des essuieglaces comportant un balai se déplaçant sur une surface à essuyer comme un pare-brise sous l'action d'un moteur. De tels essuie-glaces comportent au moins un bras oscillant portant principalement un balai supportant une lame d'essuyage. La lame d'essuyage est en général constituée d'une embase et d'un racleur ou frotteur. La lame est portée par le balai articulé sur le bras qui l'applique fortement sur la surface à balayer tout en la déplaçant dans un mouvement oscillatoire.

Afin d'éviter des problèmes de comportement mécanique comme le broutage, on sait articuler l'embase sur le frotteur proprement dit en interposant une charnière entre ces deux parties de la lame. Une telle charnière peut être réalisée par une ou plusieurs cavités pratiquées le long de la lame.

De tels dispositifs ont, en particulier à haute vitesse, des comportements aérodynamiques déceptifs. Sous l'effet des filets d'air, des surpressions apparaissent latéralement et la lame d'essuie-glace subit une contrainte qui tend à s'opposer au mouvement d'angulation sur sa charnière.

D'autre part, ces surpressions peuvent induire des freinages dans les mouvements du balai d'essuie-glace ce qu'il faut éviter par exemple dans des conditions de pilotage extrême d'un véhicule à grande vitesse par exemple.

Un autre problème apparaît dans certaines conditions d'essuyage. En effet, quand le balai essuye la surface du pare-brise, il est possible que de la boue constituée par un mélange de poussières et d'eau, mais aussi du givre s'accumule à l'endroit de la charnière. Ce phénomène réduisant la possibilité d'angulation de la charnière entre l'embase et le frotteur est gênant. De plus, cette accumulation de matière peut ensuite s'étaler sur la pare-brise.

Dans le Brevet Français FR-A-1 250 889, on a proposé une lame qui est protégée de l'air environnant, parce qu'elle est disposée à l'intérieur d'un masque en forme de gouttière porté par le bras d'essuie-glace proprement dit.

Cette réalisation de l'art antérieur présente le premier inconvénient de ne pas éviter l'introduction de poussières et l'accumulation de givre en temps de neige, par exemple entre la gouttière et la lame proprement dite. On peut arriver à un point tel que, la gouttière étant remplie de boues ou de givre, la lame d'essuieglace ne remplisse plus sa fonction.

D'autre part, la gouttière étant une pièce supplémentaire dans un essuie-glace, on constate une augmentation du cout de fabrication.

Dans la solution d'un autre problème proposée dans l'art antérieur, on sait déjà provoquer le raidissement de la lame de façon à ce que l'essuie-glace reste en permanence en contact sur toute sa longueur avec la surface à essuyer. A cet effet, la partie supérieure de l'embase, opposée à la charnière, reçoit une découpe ou cavité qui permet d'installer une vertèbre ou raidisseur. Ce dispositif augmente les risques de freinage du balai d'essuie-glace et surtout de colmatage précédemment décrits par la boue ou le givre.

Dans la demande de brevet JP-A-85 245/86, il a été prévu de disposer des ailettes de part et d'autre de la plus grande dimension du frotteur de la lame d'essuyage pour amortir les bruits lors du contact du frotteur avec l'embase.

Dans cette disposition, les ailettes ne sont pas suffisantes pour empêcher toute introduction de corps étrangers dans les cavités et la lame d'essuie-glace peut ne plus remplir sa fonction.

Afin de porter remède à ces inconvénients de l'art antérieur et d'améliorer le comportement des systèmes d'essuyage de pare-brises notamment, la présente invention concerne une lame d'essuie-glace du type comportant une embase, un frotteur articulé à l'embase par l'intermédiaire d'une charnière formant des cavités pratiquées le long de la lame et deux ailettes disposées de part et d'autre de la plus grande dimension du frotteur de manière à masquer lesdites cavités, le pivotement du frotteur étant limité lorsque l'une des ailettes entre en contact avec l'embase (Lame du type divulgué par JP-A-85 245/86) et se caractérise par le fait que les ailettes remontent à partir du frotteur au-delà des cavités de manière à ce que celles-ci soient masquées en permanence quelle que soit la position angulaire du frotteur par rapport à l'embase, notamment pendant les déplacements de la lame, de façon à protéger en permanence ces cavités contre les variations de pression d'origine aérodynamique d'une part et les accumulation de matière comme le givre d'autre part.

Divers modes de réalisation de la lame selon l'invention sont précisés dans les revendications dépendantes.

L'invention concerne aussi un balai d'essuieglace équipé d'une telle lame.

D'autres caractéristiques et avantages de la présente invention seront mieux compris à l'aide de la description et des figures annexées qui sont :
- la figure 1, une vue en coupe d'un premier mode de réalisation selon la présente invention,
- la figure 2, un second mode de réalisation de la présente invention.

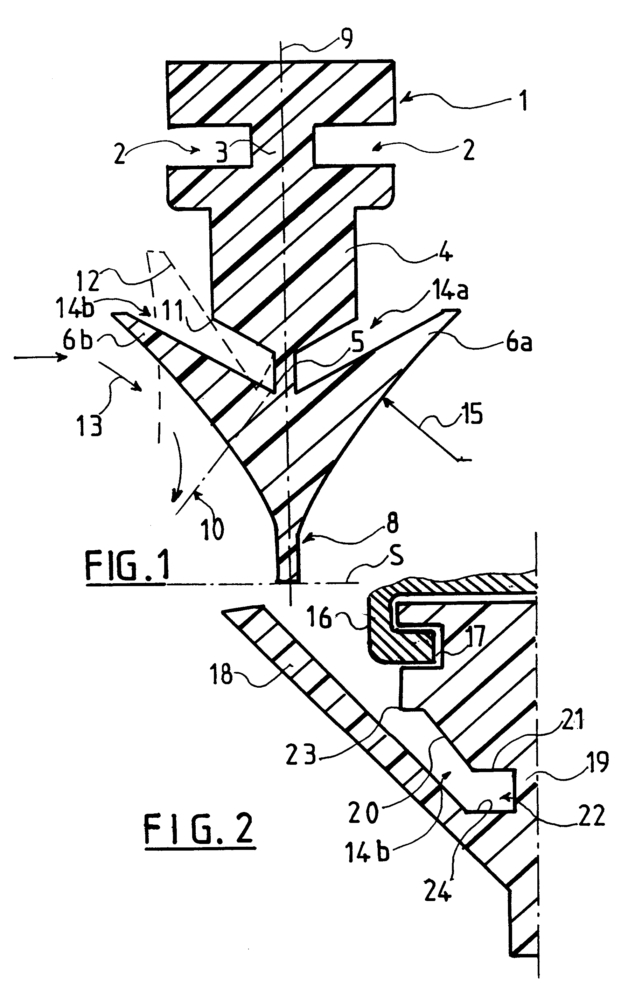

A la figure 1, on a représenté en coupe une lame selon un premier mode de réalisation de l'invention. Une telle lame comporte principalement une embase 1 et un frotteur 8 articulé sur l'embase par une charnière 5. Cette répartition est classique. Dans l'embase 1 sont prévues deux cavités longitudinales 2, lesdites cavités laissant subsister entre elles une portion 3 et une portion 4 à partir de laquelle est issue la charnière 5, ces cavités étant destinées à recevoir à titre de raidisseur une nervure (non représentée), dite aussi vertèbre, qui permet d'améliorer le comportement transversal de la lame.

Selon la présente invention, le frotteur 8 est doté de deux ailettes 6a, 6b de part et d'autre de ce frotteur. Le frotteur 8 vient en contact avec la surface S à essuyer qui a été représentée en traits mixtes. La lame de l'essuie-glace est contenue dans un plan dont la trace est représentée par le repère 9 à la figure 1. Quand la lame est immobile, la surface S est perpendiculaire au plan 9. Les ailes 6a et 6b remontent le long de ce plan de façon à venir masquer la cavité 14a ou 14b subsistant entre les ailes, la charnière 5 et la portion d'embase 4.

Les ailettes 6a et 6b comportent chacune une face intérieure tournée vers la lame et une face extérieure tournée vers le milieu environnant.

On remarque qu'un courant ou filet d'air 13 est guidé par la courbure 15 de la face extérieure de l'ailette 6a ou 6b.

Afin d'améliorer le comportement dynamique de la lame au cours de l'essuyage, on donne aux faces exterieures des ailettes des profils aérodynamiques.

Dans un mode de réalisation, la face extérieure de chaque ailette est constituée par une portion de cylindre dont le centre de courbure est disposée vers la surface à essuyer S. Un rayon de courbure typique est de 11,5 cm. Ce profil d'ailette permet d'améliorer le comportement aérodynamique de la lame pendant les opérations d'essuyage.

D'autre part, on remarque que la longueur des ailettes est telle que les cavités 14a et 14b sont masquées en permanence quelle que soit l'angulation 10 prise par la charnière 5. De cette façon, on évite la plus grande partie des risques de remplissage des cavités 14a et 14b par des dépôts de givre, de poussière ou de boue.

Selon un mode de réalisation de l'invention, l'angulation de la charnière peut être limitée à une valeur prédéterminée selon le profil des ailes 6a, 6b. En effet, pendant une angulation, la face intérieure 12 de l'une des ailes vient en contact 11 avec la portion 4 de l'embase 1 ce qui provoque un blocage élastique de l'angulation 10 de la lame autour de sa charnière 5.

Pour éviter les bruits de frottements et autres effets parasites, on choisit un profil des faces intérieures des ailes 6a et 6b tel que les surfaces de contact possibles entre ces faces intérieures et la portion 4 de l'embase 1 soient réduites au minimum.

Dans un autre mode de réalisation représenté à la figure 2, un raidisseur 16 a été installé au sommet de l'embase 1 dans les cavités 17 correspondantes sensiblement aux cavités 2 précédemment décrites. Les ailettes 18 remontent au-delà des cavités 17 de façon à garantir une bonne protection de l'ensemble de la lame.

La charnière 19 est prévue à partir de l'embase 1 après une partie tronconique 20, qui permet de manipuler les flux d'air dans la rainure ainsi constituée. Pendant une angulation de la charnière 19, la face intérieure de l'ailette 18 vient alors en appui contre un épaulement 23 de cette face tronconique.

Dans un mode de réalisation préféré, au niveau de la charnière 19 et de part et d'autre de celle-ci sont prévues des cavités 22 de forme parallélépipèdique. Ces cavités sont pratiquées de chaque coté de la lame et dans la continuité des cavités 14a,14b précédemment décrites et leur face inférieure 24 est en prolongement de la face intérieure de chaque ailette. La partie tronconique 20 est interrompue au niveau de la charnière par une paroi 21 qui limite la cavité parallélépipèdique précitée. La partie tronconique est d'une pente telle que le contact entre l'embase et l'ailette au cours d'une angulation est réduite au minimum. Cette pente peut être variable si on désire donner une courbure à cette partie de l'embase.

Dans un mode de réalisation préféré, ainsi qu'il est représenté au dessin, l'angle fait entre les ailettes est d'environ 47° réparti symétriquement autour de la plus grande dimension de la lame repérée par le trait 9. La partie tronconique de l'embase est elle-même répartie symétriquement sur un angle au sommet de 40° d'une valeur inférieure à l'ouverture des faces intérieures des ailettes.

La lame selon un mode de réalisation de l'invention peut être réalisée en un caoutchouc synthétique par extrusion.

La présente invention ne se limite pas aux modes de réalisations décrits mais se définit en fonction des revendications suivantes.

## Revendications

1. Lame d'essuie-glace du type comportant une embase(1), un frotteur (8) articulé à l'embase (1) par l'intermédiaire d'une charnière (5,19) formant des cavités (14a,14b,22) pratiquées le long de la lame et deux ailettes (6a,6b,18) disposées de part et d'autre de la plus grande dimension du frotteur (8) de manière à masquer lesdites cavités (14a,14b,22), le pivotement du frotteur (8) étant limité lorsque l'une des ailettes (6a,6b,18) entre en contact avec l'embase (1), caractérisé en ce que les ailettes (6a,6b,18) remontent à partir du frotteur (8) au-delà des cavités (14a,14b,22) de manière à ce que celles-ci (14a, 14b,22) soient masquées en permanence quelle que soit la position angulaire du frotteur (8) par rapport à l'embase (1), notamment pendant les déplacements de la lame, de façon à protéger en permanence ces cavités (14a,14b,22) contre les variations de pression d'origine aérodynamique d'une part et les accumulations de matière comme le givre ou la poussière d'autre part.

2. Lame d'essuie-glace selon la revendication 1, caractérisée en ce que les ailettes (6a, 6b, 18) ont une extension qui réalise un masquage de toute la lame.

3. Lame d'essuie-glace selon la revendication 1, à 2, cactérisée en ce que chaque ailette (6a, 6b, 18) a une face externe relativement à la charnière (5,19) dont la surface présente un profil à caractéristiques aérodynamiques.

4. Lame d'essuie-glace selon la revendication 3, caractérisée en ce que la face externe de chaque ailette (6a, 6b) est incurvée.

5. Lame d'essuie-glace selon la revendication 1, caractérisée en ce que la face intérieure de chaque ailette (6a, 6b, 18) présente une surface telle qu'au cours d'une angulation autour de la charnière (5, 19) la surface mise en contact en butée sur l'embase (1) soit minimale.

6. Lame d'essuie-glace selon la revendication 5, caractérisée en ce que l'embase (1) comporte une partie tronconique (20) dotée d'un épaulement (23) sur lequel vient en butée une face intérieure de l'ailette (18) pendant une angulation de la lame sur sa charnière (19).

7. Lame d'essuie-glace selon l'une des revendications précédentes, caractérisée en ce que les ailettes sont de forme allongée dont les directions forment un angle prédéterminé, par exemple de l'ordre de 47°, symétriquement autour de la plus grande dimension (9) de la lame d'une valeur supérieure à l'angle d'ouverture par exemple de l'ordre de 40°, fait par l'embase(4).

8. Lame d'essuie-glace selon l'une des revendications précédentes, caractérisée en ce que des cavités de forme parallélépipèdique (22) sont prévues de part et d'autre de la charnière (19).

9. Balai d'essuie-glace caractérisé en ce qu'il comporte une lame selon l'une des revendications précédentes.

## Claims

1. A screen wiping strip of the type comprising a base (1), a wiping element (8) articulated to the base (1) through a hinge (5, 19) defining cavities (14a, 14b, 22) formed along the strip, and two wing portions (6a, 6b, 18) disposed on either side of the largest dimension of the wiping element (8), so as to mask the said cavities (14a, 14b, 22), the pivoting movement of the wiping element (8) being limited when one of the wing portions (6a, 6b, 18) enters into contact with the base (1), characterised in that the wing portions (6a, 6b, 18) extend from the wiping element (8) beyond the cavities (14a, 14b, 22), in such a way that these latter (14a, 14b, 22) are permanently masked regardless of the angular position of the wiping element (8) with respect to the base (1), especially during the displacements of the strip, whereby permanently to protect the said cavities (14a, 14b, 22) against, firstly, variations in aerodynamic pressure, and secondly, accumulations of matter such as ice or dust.

2. A screen wiping strip according to Claim 1, characterised in that the wing portions (6a, 6b, 18) have an extension which masks the whole of the strip.

3. A screen wiping strip according to Claim 1, to 2, characterised in that each wing portion (6a, 6b, 18) has a face which is external in relation to the hinge (5, 19), the surface of which has a profile with aerodynamic characteristics.

4. A screen wiping strip according to Claim 3, characterised in that the outer face of each wing portion (6a, 6b) is concavely curved.

5. A screen wiping strip according to Claim 1, characterized in that the internal face of each wing portion (6a, 6b, 18) has a surface such that, in the course of an angular deformation about the hinge (5, 19), the surface area coming into contact against the base (1) is minimised.

6. The screen wiping strip according to Claim 5, characterised in that the base (1) includes a frustoconical portion (20) having a shoulder (23), on which an internal surface of the wing portion (18) comes into abutment during angular deformation of the strip about its hinge (19).

7. A screen wiping strip according to one of the preceding Claims, characterized in that the wing portions are of elongated form, the directions of which define a predetermined angle, for example of the order of 47°, symmetrically about the greatest dimension (9) of the strip, and having a value which is greater than the angle of opening, which is for example of the order of 40°, defined by the base (4).

8. A screen wiping strip according to one of the preceding Claims, characterized in that cavities (22) in the form of parallelepipeds are arranged on either side of the hinge (19).

9. A screen wiper, characterised in that it includes a wiping strip in accordance with one of the preceding Claims.

## Patentansprüche

1. Scheibenwischerleiste, bestehend aus einem Fußstück (1), einem Wischansatz (8), der an dem Fußstück (1) über eine Gelenkstelle (5, 19) mit Austiefungen (14a, 14b, 22) entlang der Scheibenwischerleiste angelenkt ist, und zwei Flügeln (6a, 6b, 18), die auf beiden Seiten der größten Abmessung des Wischansatzes (8) angeordnet sind, so daß sie die Austiefungen (14a, 14b, 22) abdecken, wobei die Schwenkbewegung des Wischansatzes (8) bei der Auflage eines der Flügel (6a, 6b, 18) auf dem Fußstück (1) begrenzt wird, **dadurch gekennzeichnet,** daß die Flügel (6a, 6b, 18) von dem Wischansatz (8) aus über die Austiefungen (14a, 14b, 22) hinaus ansteigen, so daß diese (14a, 14b, 22) ständig abgedeckt sind, unabhängig von der Winkelstellung des Wischansatzes (8) im Verhältnis zum Fußstück (1), insbesondere während der Bewegungen der Scheibenwischerleiste, um diese Austiefungen (14a, 14b, 22) ständig einerseits gegen aerodynamisch bedingte Druckveränderungen und andererseits gegen die Ansammlung von Material wie etwa Reif oder Staub zu schützen.

2. Scheibenwischerleiste nach Anspruch 1, **dadurch gekennzeichnet,** daß die Flügel (6a, 6b, 18) eine Ausdehnung aufweisen, die eine Abdeckung der gesamten Scheibenwischerleiste herbeiführt.

3. Scheibenwischerleiste nach Anspruch 1 bis 2 , **dadurch gekennzeichnet,** daß der Flügel (6a, 6b, 18) eine Außenseite im Verhältnis zu der Gelenkstelle (5, 19) hat, deren Fläche ein Profil mit aerodynamischen Eigenschaften aufweist.

4. Scheibenwischerleiste nach Anspruch 3, **dadurch gekennzeichnet,** daß die Außenseite jedes Flügels (6a, 6b) gekrümmt ist.

5. Scheibenwischerleiste nach Anspruch 1, **dadurch gekennzeichnet,** daß die Innenseite jedes Flügels (6a, 6b, 18) eine Fläche aufweist, die so gestaltet ist, daß im Laufe einer Abwinklung um die Gelenkstelle (5, 19) die auf dem Fußstück (1) zum Anschlag kommende Fläche minimal ausfällt.

6. Scheibenwischerleiste nach Anspruch 5, **dadurch gekennzeichnet,** daß das Fußstück (1) einen kegelstumpfförmigen Teil (20) mit einer Schulter (23) umfaßt, auf der eine Innenseite des Flügels (18) während einer Abwinklung der Scheibenwischerleiste um ihre Gelenkstelle (19) zum Anschlag kommt.

7. Scheibenwischerleiste nach einem der vorangehenden Ansprüche, **dadurch gekennzeichnet**, daß die Flügel eine längliche Form aufweisen, deren Richtungen einen vorgegebenen Winkel bilden, beispielsweise in einer Größenordnung von 47°, in symmetrischer Anordnung um die größte Abmessung (9) der Scheibenwischerleiste mit einem Wert, der größer als der Öffnungswinkel, beispielsweise in einer Größenordnung von 40°, ist, der durch das Fußstück (4) gebildet wird.

8. Scheibenwischerleiste nach einem der vorangehenden Ansprüche, **dadurch gekennzeichnet**, daß parallelepipedförmige Austiefungen (22) auf beiden Seiten der Gelenkstelle (19) vorgesehen sind.

9. Scheibenwischerblatt , **dadurch gekennzeichnet,** daß es eine Scheibenwischerleiste nach einem der vorangehenden Ansprüche umfaßt.
